# EUROPEAN PATENT APPLICATION

(11) **EP 4 764 891 A1**
(43) Date of publication of application: **24.06.2026**
(21) Application number: 25205707.0
(22) Date of filing: 30.09.2025
(51) Int. Cl.: G06F 16/40

(54) **METHOD, APPARATUS, DEVICE, MEDIUM AND PROGRAM PRODUCT FOR MEDIA CONTENT GENERATION**

(30) Priority: 18.12.2024 CN 202411877365
(71) Applicant: Beijing Zitiao Network Technology Co., Ltd., Beijing 100190 (CN)
(72) Inventor: Zhou, Lin, Chaoyang District, Beijing, 100028 (CN); Yan, Yong, Chaoyang District, Beijing, 100028 (CN); Tao, Shu, Chaoyang District, Beijing, 100028 (CN); Wang, Rui, Chaoyang District, Beijing, 100028 (CN); Zhao, Yafeng, Chaoyang District, Beijing, 100028 (CN); Zhou, Chongxing, Chaoyang District, Beijing, 100028 (CN); Zhang, Jinlei, Chaoyang District, Beijing, 100028 (CN); Jiang, Xiangrui, Chaoyang District, Beijing, 100028 (CN); Wang, Yue, Chaoyang District, Beijing, 100028 (CN); Shi, Tianhui, Chaoyang District, Beijing, 100028 (CN)
(74) Representative: Grünecker Patent- und Rechtsanwälte PartG mbB

(57) **Abstract**

According to embodiments of the present disclosure, a method, apparatus, device, a medium and a program product for media content generation are provided. The method includes: determining, in response to receiving a media content generation request of a user, at least one keyword corresponding to at least one factor of a plurality of factors related to media content generation based on the media content generation request; determining a material set matching the at least one keyword from a media content material library; generating a description text for media content to be generated based on the material set and the at least one keyword corresponding to the at least one factor; selecting a plurality of media content materials matching a story description from the material set; and generating media content based on the plurality of media content materials.

## Description

### FIELD

Example embodiments of the present disclosure generally relate to the field of computers, and in particular, to methods, apparatuses, devices, computer-readable storage media, and computer program products for media content generation.

### BACKGROUND

With development of machine learning technologies, a machine learning model is learned and trained with a large amount of data. The obtained model can be used for technology that automatically generate various forms of content such as text, image, audio, media content, etc. At present, it is desirable to obtain high-quality media content that meets users' requirements in various practical applications involving automatic film formation based on media content materials of a user.

### SUMMARY

In a first aspect of the present disclosure, a method for media content generation is provided. The method comprises: determining, in response to receiving a media content generation request of a user, at least one keyword corresponding to at least one factor of a plurality of factors related to media content generation based on the media content generation request; determining a material set matching the at least one keyword from the media content material library; generating a description text for the media content to be generated based on the material set and the at least one keyword; selecting a plurality of media content materials matching the description text from the material set; and generating media content based on the plurality of media content materials.

In a second aspect of the present disclosure, an apparatus for media content generation is provided. The apparatus comprises: a keyword determination module configured to determine, in response to receiving a media content generation request of a user, at least one keyword corresponding to at least one factor of a plurality of factors related to media content generation based on the media content generation request; a material set determination module configured to determine a material set matching the at least one keyword from the media content material library; a description text generation module configured to generate a description text for media content to be generated based on the material set and the at least one keyword; a media content material selection module configured to select a plurality of media content materials matching the description text from the material set; and a media content generation module configured to generate media content based on the plurality of media content materials.

In a third aspect of the present disclosure, an electronic device is provided. The device comprises at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium stores a computer program executable by a processor to implement the method of the first aspect.

In a fifth aspect of the present disclosure, a computer program product is provided. The computer program product is tangibly stored in a computer storage medium and comprises computer-executable instructions that, when executed by a device, cause the device to perform the method of the first aspect.

It should be understood that the content described in this section is not intended to limit key features or important features of embodiments of the present disclosure, nor is it intended to limit a scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with drawings. In the drawings, the same or similar reference numbers refer to the same or similar elements, wherein:
FIG. 1 illustrates a schematic diagram of an example environment in which embodiments of the present disclosure can be implemented;
FIG. 2 illustrates a flowchart of a process for media content generation according to some embodiments of the present disclosure;
FIG. 3 illustrates a flowchart of a semantic analysis process for a media content generation request according to some embodiments of the present disclosure;
FIG. 4 illustrates a flowchart of a process for preliminary screening of media content materials according to some embodiments of the present disclosure;
FIG. 5 illustrates a schematic diagram of an example structure for performing material secondary screening on a candidate material set according to some embodiments of the present disclosure;
FIG. 6 illustrates a schematic diagram of an example structure for generating a story description according to some embodiments of the present disclosure;
FIG. 7 illustrates a flowchart of a process for selecting a media content template according to some embodiments of the present disclosure;
FIG. 8 illustrates a flowchart of a process for media content generation according to some embodiments of the present disclosure;
FIG. 9 illustrates a block diagram of an apparatus for media content generation according to some embodiments of the present disclosure; and
FIG. 10 illustrates a block diagram of an electronic device capable of implementing one or more embodiments of the present disclosure.

### DETAILED DESCRIPTION

Embodiments of the present disclosure will be described in more detail below with reference to the drawings. While certain embodiments of the present disclosure are shown in the drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit a scope of the present disclosure.

In description of the embodiments of the present disclosure, the terms "comprise" and its variants should be understood as open terms that mean "include, but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

Herein, unless explicitly stated, performs one step "in response to A" does not imply that this step is performed immediately after "A", but may include one or more intermediate steps.

It may be understood that data involved in a technical solution (including but not limited to the data itself, obtaining, using, storing or deleting of the data) should follow requirements of corresponding laws and regulations and related regulations.

It may be understood that before using technical solutions disclosed in embodiments of the present disclosure, relevant users should be informed of types, use ranges, usage scenarios, and the like of information related to the present disclosure in an appropriate manner according to relevant laws and regulations, and the authorization of the related users may be obtained, wherein relevant users may include any type of rights body, such as individuals, businesses, and groups.

For example, in response to receiving an active request of a user, prompt information is sent to the related user to explicitly prompt the related user, and an operation requested to be performed will need to obtain and use information of the related user. Thus, the related user may autonomously select whether to provide information to software or hardware such as an electronic device, an application, a server or a storage medium that perform operation of the technical solutions of the present disclosure according to the prompt information.

As an optional but non-limiting implementation, in response to receiving an active request from a related user, a manner of sending the prompt information to the related user may be, for example, a pop-up window in which prompt information may be presented in text. In addition, the pop-up window may further contain a selection control for the user to select "agree" or "disagree" to provide information to an electronic device.

It may be understood that the foregoing notification and acquisition of user authorization process are merely illustrative, and do not constitute a limitation on implementations of the present disclosure. Other manners of meeting related laws and regulations may also be applied to implementations of the present disclosure.

As used herein, the term "model" may learn an association relationship between respective inputs and outputs from training data, such that a corresponding output may be generated for a given input after training is complete. Generation of the model may be based on machine learning techniques. Deep learning is a machine learning algorithm that processes inputs and provides corresponding outputs by using a multi-layer processing unit. A neural network model is one example of a deep learning-based model. As used herein, a "model" may also be referred to as a "machine learning model," a "learning model," a "machine learning network," or a "learning network," which terms are used interchangeably herein.

A "neural network" is a machine learning network based on deep learning. The neural network is capable of processing inputs and providing respective outputs, which typically include an input layer and an output layer and one or more hidden layers between the input layer and the output layer. Neural networks used in deep learning applications typically include many hidden layers, increasing a depth of the network. Each layer of the neural network is connected in sequence, such that the output of the previous layer is provided as an input to the next layer. In this case, the input layer receives the input of the neural network, and the output of the output layer serves as a final output of the neural network. Each layer of the neural network includes one or more nodes (also referred to as processing nodes or neurons), each node processing input from the previous layer.

Generally, machine learning may include three phases, a training phase, a testing phase, and an application phase (also referred to as an inference phase). In the training phase, a given model may be trained using a large amount of training data, constantly updating parameter values iteratively until the model is able to obtain consistent inferences from the training data that satisfy expected objectives. By training, the model may be considered to be able to learn from the training data an association from input to output (also referred to as mapping of input to output). The parameter values of the trained model are determined. In the testing phase, a test input is applied to the trained model to test whether the model can provide correct output, thereby determining a performance of the model. In the application phase, the model may be used to process an actual input based on the parameter values obtained by training to determine a corresponding output.

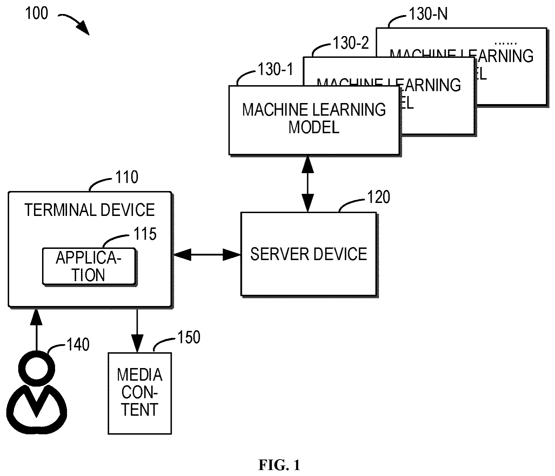

FIG. 1 illustrates a schematic diagram of an example environment 100 in which embodiments of the present disclosure can be implemented. The example environment 100 may include a terminal device 110. An application 115 for managing a media content material library is installed in the terminal device 110. The media content material library stores media content materials such as images and videos. The media content material library may also be referred to as a visual material library or a gallery. In some embodiments, the application 115 may be an album application for storing and managing photos, videos, and the like taken by the user 140 through the terminal device 110. It should be understood that the application 115 may also be any other suitable application, in which the media content materials may be stored and managed.

In some embodiments, the user 140 may interact with the application 115 via the terminal device 110 and/or an attachment device of the terminal device 110. In embodiments of the present disclosure, the application 115 may have an intelligent dialogue and a task processing capability. Generally, the application 115 can support the user 140 to enter a request in natural language, and perform a task based on understanding of a natural language input and a logical reasoning capability to generate a corresponding media content story, such as the media content 150. For example, the application 115 may support text dialogue services, voice dialogue services, and content dialogue in other modalities with the user 140.

In some embodiments, the terminal device 110 communicates with the server device 120 to realize supply of services for the application 115. In some embodiments, the server device 120 may utilize a machine learning model 130 to provide services for the application 115. The machine learning model 130 may include one or more machine learning models, such as a machine learning model 130-1, a machine learning model 130-2, ..., a machine learning model 130-N, wherein N is a positive integer, and for ease of description, one or more machine learning models are collectively referred to as the machine learning models 130 herein. The different machine learning models 130 may be configured to implement different functions in different ways to supply the services of the application 115 by the server device 120. The machine learning model 130 may run locally on the terminal device 110 or the server device 130, or may be deployed in a remote device, a cloud environment, etc., which is not limited herein.

In some embodiments, the terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 can also support any type of interface for a user (such as a "wearable" circuit, etc.).

The server device 120 may be various types of computing systems/servers capable of providing computing power, including, but not limited to, a mainframe, an edge computing node, a computing device in the cloud environment, and the like. The server device may be implemented, for example, based on the cloud environment.

It should be understood that structures and functions of various elements in the environment 100 are described for illustrative purposes only and do not imply any limitation to the scope of the present disclosure.

As briefly mentioned above, a function of automatic film formation of the media content material library (such as an album) refers to automatically analyzing, organizing and editing materials such as photos and videos in a user's terminal device (such as a mobile phone) to generate the media content (for example, a video). However, there are some drawbacks in current techniques of the automatic film formation .

In an aspect of a material analysis step, currently extracted material label only has several words (for example, blue sky, grassland and tent), relationship between content presented by materials and the materials cannot be completely analyzed, and a large amount of information is lost, causing problems of inaccurate extraction and error extraction of pictures and videos. In an aspect of story theme recommendation step, themes of the film formation of current solutions depend on a predefined template, the number is limited, and a granularity is also relatively coarse. In addition, due to the lack of freedom, the user cannot arrange storylines according to their ideas and format a personalized film.

In view of this, embodiments of the present disclosure provide an improved solution for media content generation. In this solution, in response to receiving a media content generation request of a user, at least one keyword corresponding to at least one factor of a plurality of factors related to media content generation is determined based on the media content generation request. A material set matching the at least one keyword is determined from the media content material library. A description text for media content to be generated is generated based on the material set and the at least one keyword. A plurality of media content materials matching the description text are selected from the material set. Accordingly, media content is generated based on the plurality of media content materials.

In this way, by matching input request semantics of the user with a plurality of factors, matching the two with the description text, and matching the media content materials and the description text, the generated media content can conform to the request semantics of the user, and to actual presentation content of the media content material, thus loss of information expressed by the media content material is avoided. This enhances association between media content materials, and can obtain high-quality media content that meets user's requirements, which is beneficial to improve user experience.

It should be understood that the structures and functions of the various elements in the environment 100 are described for illustrative purposes only and do not imply any limitation to the scope of the present disclosure.

Some example embodiments of the present disclosure will be described below with continued reference to the drawings.

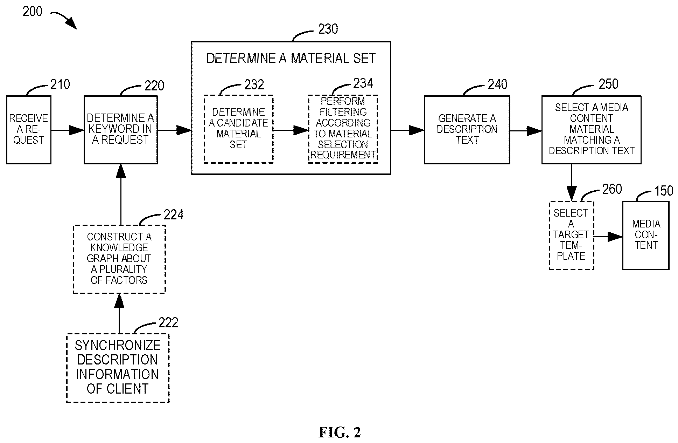

FIG. 2 illustrates a flowchart of a process 200 for media content generation according to some embodiments of the present disclosure. For ease of discussion, these embodiments will be described with reference to the environment 100 of FIG. 1. In some examples, these embodiments may be implemented at the server device 120 of FIG. 1. In other examples, these embodiments may also be implemented locally in a client, that is, in the terminal device 110, or by cooperation of the terminal device 110 and the server device 120. The following specific embodiments are implemented at the server device 120 as an example.

As shown in FIG. 2, the server device 120 may receive a media content generation request (210) of the user 140. In some embodiments, such media content generation request may be received by the server device 120 from the terminal device 110. As an example, the terminal device 110 may receive, through the application 115, a request (query) statement input by the user 140. The application 115 can support the user 140 to enter a request statement or an query statement in natural language. For example, the application 115 may support text input, voice input, and input in other modalities by the user 140. Here, the media content generation request of the user 140 may include information related to stories, such as story topics, story summaries, and the like.

Further, if receiving the media content generation request of the user 140, the server device 120 determines (220) at least one keyword corresponding to at least one factor of the plurality of factors related to the media content generation based on the media content generation request. In some embodiments, the plurality of factors may include at least two of time factor, location factor, character factor, event factor. The time factor, the location factor, the character factor, and/or the event factor are several elements that make up a story. By considering these factors, the media content that meets user's requirements and conforms to story narrative can be generated from the materials that can be used by the user. It should be understood that the plurality of factors may also include any other suitable factors related to the story, which is not limited herein. In some embodiments, each factor may correspond to one or more keywords. For example, a plurality of keywords about a location, a plurality of keywords about an event, and the like may be given in the media content generation request, and details are not described herein again.

In some embodiments, the server device 120 may analyze semantics of the media content generation request with one or more machine learning models 130 to determine at least one keyword corresponding to at least one factor of the plurality of factors. Such a machine learning model 130 may include, for example, a language model (LM), or other models capable of understanding natural language and performing semantic related task. The language model may refer to a language model having a large number of parameters and complex structures in the field of machine learning.

In some embodiments, when determining at least one keyword corresponding to at least one factor of the plurality of factors, the server device 120 may extract, from the media content generation request, at least one keyword corresponding to the at least one factor of the plurality of factors. For example, assuming that the media content generation request of the user 140 is "traveling to a certain place on X day, X month, X year", the server device 120 may extract, from the request statement with the language model, a keyword "X day, X month, X year" corresponding to the time factor and a keyword "certain place" corresponding to the location factor.

Alternatively or additionally, in some embodiments, when determining the at least one keyword corresponding to the at least one factor of the plurality of factors, the server device 120 may determine, based on a semantic analysis of the media content generation request, a keyword corresponding to at least one other factor of the plurality of factors. For example, the server device 120 may utilize the language model to perform the semantic analysis on the media content generation request to determine whether the media content generation request has keywords corresponding to the plurality of factors. If it is determined that the media content generation request lacks a keyword corresponding to the at least one other factor of the plurality of factors, content may be added to the media content generation request, so as to complete keywords corresponding to other factors.

For example, in the media content generation request of above "traveling to a certain place on X day, X month, X year", the server device 120 may determine, with the language model, that the request statement lacks keywords corresponding to the character factor and the event factor, and may then supplement a keyword corresponding to the character factor and/or a keyword corresponding to the event factor to the request statement.

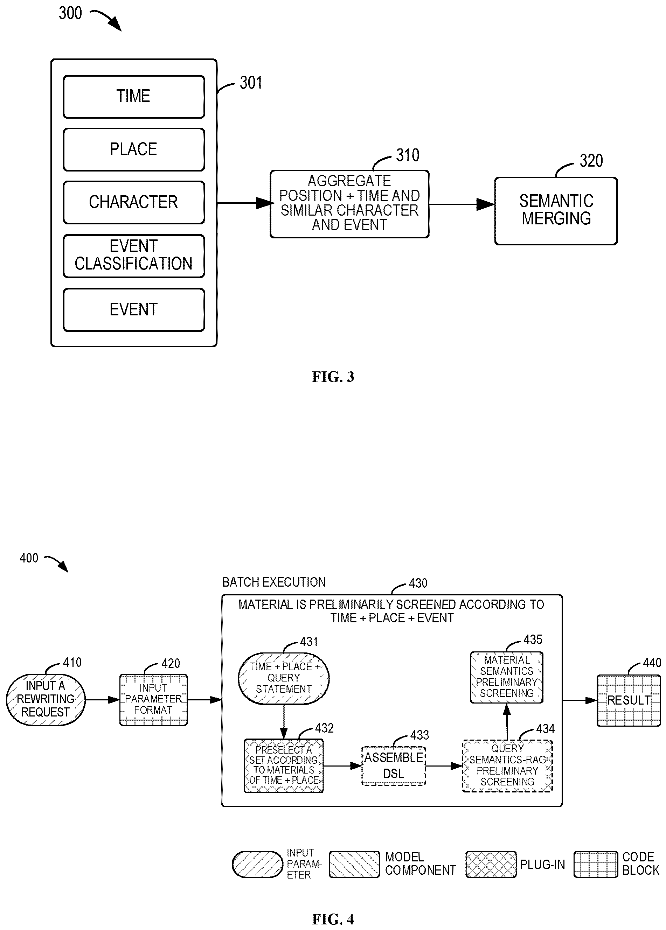

FIG. 3 illustrates a flowchart of a semantic analysis process 300 for a media content generation request according to some embodiments of the present disclosure. The process 300 may be illustrated as a partial embodiment of the step of block 220 in FIG. 2 to rewrite or complete information on the input media content generation request. In the process 300, the server device 120 may extract, from the media content generation request, a plurality of factors 301 corresponding to the time, location, character, and event (including an event type and an event description) with a language model. Information of these factors may be general, for example, may be a time range, a position range, or the like. In some embodiments, if the media content generation request does not explicitly include information corresponding to one or more factors, the server device 120 may also complete the information of missing factor by using the model in combination with context information or other information.

In some embodiments, the server device 120 may further screen related media content materials from the media content material library based on a plurality of factors 301 extracted from the inputted media content generation request, perform semantic merging based on the screened media content materials, and rewrite the inputted media content generation request by means of the merged information to implement information completion of the missing factors in the inputted media content generation request. For example, in the case that the event factor and the character factor are missing in the inputted media content generation request, the language model may be used to aggregate (310) media content materials with the location and time factor similar to the inputted media content generation request in the media content material library to obtain the character and the event corresponding to the location and time. In addition, the server device 120 may further perform the semantic merging (320) based on an aggregation result, so as to obtain updated media content generation request according to the merged information. The aggregation result may include one or more data entries, and a format of each data entry may be: a keyword corresponding to the time factor + a keyword corresponding to the location factor + a keyword corresponding to the character factor + a keyword corresponding to the event factor. When performing the semantic merging on the aggregation result, an approximate entry combination may be performed on the keyword corresponding to the time factor and the keyword corresponding to the location factor, and polishing summary may be performed on the keyword corresponding to the character factor and the keyword corresponding to the event factor. The inputted media content generation request is rewritten according to a merging result, and the missing event factor and the character factor are supplemented.

Therefore, with a semantic understanding of the media content generation request of the user 140 and by supplementing keywords corresponding to partial factors that are missing in the media content generation request, more sufficient information can be obtained for subsequent material inquiry to improve a scene coverage of generated media generation content.

Referring back to FIG. 2, further, the server device 120 determines (230) a material set matching at least one keyword from the media content material library. The media content material library may be a repository for users 140 to store a variety of media content materials, such as images, videos, animations, and the like. The media content material in the media content material library may be updated, such as adding a new media content material, deleting outdated or poor-quality media content material, and the like. As an example, the media content material library may be a local album for storing photos, videos, and the like captured by the user 140 through the terminal device 110. Correspondingly, the update of the media content material may be performed by the user 140 through interaction with the terminal device 110. In addition, the media content material library may also be an uploaded media content material set in the application 115. In another example, the media content material in the media content material library may also be automatically updated according to a predetermined requirement. A media content material library may also sometimes be referred to as a visual material library or a gallery.

In some embodiments, the media content material in the media content material library may be marked with a label corresponding to at least some of a plurality of factors (i.e., the time factor, the location factor, the character factor, and/or the event factor). In this way, when determining the material set, the label corresponding to the at least one factor that is marked in the media content material library and that corresponds to the at least one factor may be extracted, and the material set is selected from the media content material library by matching a label corresponding to the at least one factor of each visual material with the at least one keyword.

In such embodiments, the media content material may be marked with labels corresponding to at least some of factors such as the time factor, the location factor, the character factor, the event factor. For example, for a picture material, it may be marked with labels respectively corresponding to the time factor, the location factor, and the event factor. For another picture material, it may be marked with labels respectively corresponding to the event factor and the character factor.

In some embodiments, when marking the media content material in the media content material library with the labels corresponding to at least some of the plurality of factors, the server device 120 may parse the description information corresponding to the media content material in the media content material library, to determine a label corresponding to at least some of the plurality of factors corresponding to the media content material. Then, on the basis of a plurality of factors, the server device 120 may construct (224) a knowledge graph corresponding to the media content material library, wherein the knowledge graph indicates marked labels corresponding to at least a part of factors of each media content material in the media content material library.

In such an embodiment, the description information corresponding to the media content material may be sent by the terminal device 110 to the server device 120. As an example, the terminal device 110 may be configured with a machine learning model, at least for extracting the description information from the media content material. For example, the machine learning model may extract illustrative information (caption), meta information (which may include creation time, longitude and latitude information, background information), and the like from a picture and a video, and may also extract information such as material aesthetics and similarity, or other information, to serve as the description information of the media content material. It should be noted that, when extracting the illustrative information from the video, the corresponding illustrative information may be generated by means of video sequence frames. The terminal device 110 may periodically scan the material, synchronize (222) the description information of newly added material in the media content material library to the server device 120, making data consistent. It should be understood that the extraction of description information from the media content material is authorized by the user and meets the requirements of related laws and regulations.

In some embodiments, the machine learning model 130 may be used to perform parsing on the synchronized description information of the media content material, thereby completing the knowledge graph. In some embodiments, the knowledge graph may be constructed asynchronously by the server device 120, and can be used as a retrieval library for retrieving at least one label corresponding to each media content material. The material used for subsequent film formation is selected with the help of the knowledge graph, which can enhance an association between media content materials, and closely link the generated story media content with actual expression of user material.

In some embodiments, when selecting the material set from the media content material library, the server device 120 may select (232) a candidate material set matching the at least one keyword from the media content material library, and then filter (234) the candidate material set based at least on the predetermined material selection requirement to determine (230) the material set. In this way, the media content materials may be preliminarily screened and then subjected to secondary screening, thereby determining a high-quality material set. Specific embodiments of performing the preliminary screening and the secondary screening on media content materials in a media content material library are discussed in detail below.

In some embodiments, when selecting the candidate material set matching the at least one keyword from the media content material library, the server device 120 may select, from the media content material library, a predetermined number of media content materials with labels respectively matching keywords of each factor according to each factor of the at least one factor. For example, for a keyword "X year X month X day" corresponding to the time factor, the media content material with "X year X month X day" may be selected from the media content material. In the similar manner, the predetermined number of media content materials may be selected. Then, the server device 120 may select the candidate material set related to the media content generation request from the predetermined number of media content materials. Here, the predetermined number of media content materials may be semantically compared with the media content generation request, and several media content materials conforming to the input semantics of the user 140 may be retained to form the candidate material set.

FIG. 4 illustrates a flowchart of a process 400 for preliminary screening of media content materials according to some embodiments of the present disclosure. The process 400 may be illustrated as a specific embodiment of the step of block 232 in FIG. 2. In the process 400, a rewriting request of the media content generation request may be input (410), and the rewriting request is written (420) into the rewriting request according to an input parameter format, and then preliminary screening of the media content material is batch executed (430) according to the at least one keyword in the rewriting request (as a screening process shown in FIG. 3). In some embodiments, in the batch execution process, according to the time factor, the location factor, and the keywords corresponding to the two factors (431), a predetermined number (e.g., 1000 or another number) of media content materials that respectively match keywords of the two factors may be selected (432) from the media content material library as a preselected set.

Secondly, if the predetermined number is greater than a predetermined threshold, a Retrieval-Augmented Generation (RAG) preliminary screening may be performed. Specifically, the pre-selected set may be parsed (433) to assemble domain specific language DSL, and the vector feature-based RAG preliminary screening may be performed (434) according to the preselected set to select a certain number (such as 200 or another number) of media content materials. If the predetermined number is less than or equal to the predetermined threshold, or the RAG preliminary screening has been performed (434), semantic preliminary screening (435) may be performed on the preselected set or a certain number of media content materials. Specifically, the preselected set or a certain number of media content materials may be semantically compared with the media content generation request, and a material list conforming to the user input semantics may be retained as the candidate material set. A result of the media content material preliminary screening may then be output (440). It should be understood that process 400 is merely an example and is not intended to be limiting.

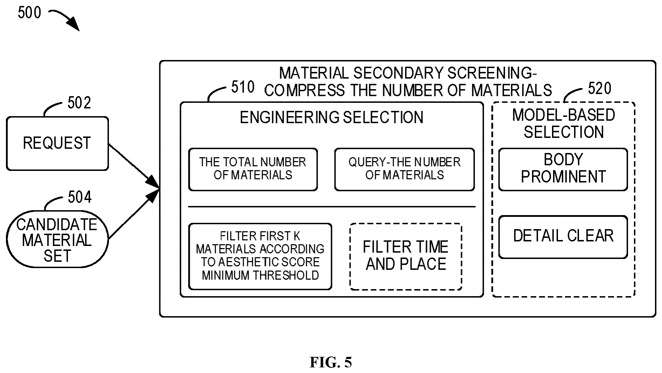

FIG. 5 illustrates a schematic diagram of an example structure 500 for performing material secondary screening on a candidate material set according to some embodiments of the present disclosure. The example structure 500 may be illustrated as a structure employed by the step of block 234 in FIG. 2. In the example structure 500, the media content material secondary screening may be performed based on a media content generation request 501 and a candidate material set 504 using an engineering selection manner 510 or a model-based selection manner 520 to obtain a material set.

For the engineering selection manner 510, in some embodiments, a media content material in the candidate material set 504 may first be deduplicated to exclude a media content material repeated or similar therein. Then, whether to perform filtering on the candidate material set may be determined according to the total number of materials in the candidate material set 504 and the number of materials corresponding to each keyword 502 therein. For example, if the total number of materials in the candidate material set exceeds 200, and/or the number of materials corresponding to each keyword exceeds 40, it may be determined to perform filtering. The manner of filtering may include, but is not limited to, an aesthetic score filtering manner and a time and place filtering manner. For the aesthetic score filtering manner, the number of materials in the candidate material set 504 may be compressed according to a selection requirement such as an aesthetic score minimum threshold and a manner of filtering the first K media content materials (K is a positive integer, the value range thereof is greater than 1 and less than the number of materials in the candidate material set). In this way, media content material with defects such as blurring, overexposure, unclear body, etc. may be excluded. For a time and place filtering manner, materials with a larger time span and different places in the candidate material set 504 may be filtered out. It should be understood that the filtering manner is not limited thereto, and suitable secondary screening and filtering manners may also be adopted according to actual requirements.

For the model-based selection manner 520, in some embodiments, when performing filtering on the candidate material set, the server device 120 may filter the candidate material set with a machine learning model based on a matching degree between description information respectively corresponding to each media content material in the candidate material set and a material selection requirement. As an example, material selection requirements may include material quality requirements such as main body prominent requirements, detail clear requirements, and the like. In some embodiments, the material selection requirement may further include removing a repeated material, selecting a material with aesthetic score is higher than a threshold, and the like. The specific material selection requirement may be configured according to actual application requirements, which is not limited herein. For example, a language model may be used to perform matching on the description information corresponding to each media content material in the candidate material set and the quality requirement, and filter out media content material with a low matching degree according to a number requirements to obtain the material set.

Therefore, by performing the preliminary screening and the secondary screening on the media content material, the media content material meeting input request semantics of the user and high in quality can be screened out, and quality of film formation is improved.

Referring back to FIG. 2, further, based on the material set and the at least one keyword corresponding to the at least one factor, the server device 120 generates (240) description text for the media content to be generated. In some embodiments, if the media content to be generated is a video, the description text may be referred to as a story description. The description text may include a plurality of segment descriptions arranged in sequence for the media content to be generated. In some embodiments, if the media content to be generated is the video, then a segment may be referred to as a storyboard. Accordingly, the segment description may be referred to as a storyboard description of a storyboard in the video.

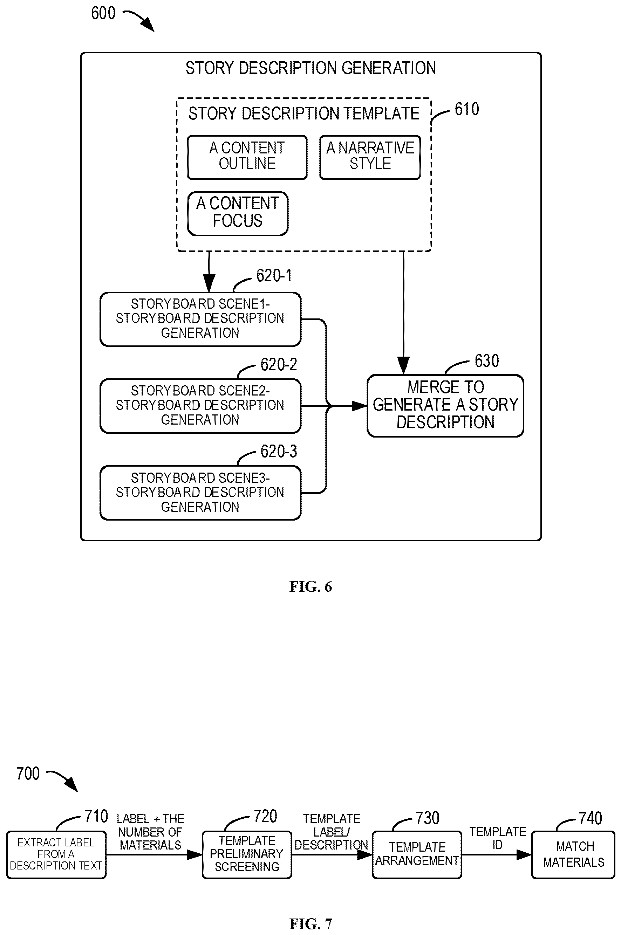

FIG. 6 illustrates a schematic diagram of an example structure 600 for generating a story description according to some embodiments of the present disclosure. The example structure 600 may be illustrated as a structure employed by the step of block 240 in FIG. 2. In the structure 600, a story description template 610 may be employed in generating story descriptions. The story description template 610 may include, for example, description content related to a content outline manner, a narrative style, a content focus, and the like, which may be directly filled in with the storyboard description.

In some embodiments, when generating the description text, for the target factor of the at least one factor, based on the material set, the media content generation request, and a keyword corresponding to the target factor, the server device 120 may generate a plurality of segment descriptions for the media content to be generated. The plurality of generated segment descriptions are a plurality of storyboard descriptions, for example, may include a storyboard description 620-1, a storyboard description 620-2, and a storyboard description 620-3. The server device 120 may then merge (630) the plurality of storyboard descriptions into a story description. As an example, the server device 120 may utilize a language model to generate the plurality of storyboard descriptions and story descriptions.

For example, taking the time factor in the at least one factor as the target factor for example, the language model may be used to generate the storyboard description corresponding to the time factor according to the material set, the media content generation request, and the keyword corresponding to the time factor (for example, "X year X month X day"). In short, the storyboard description may be a storyboard description with time as a main line. Accordingly, a plurality of storyboard descriptions may be generated for at least one factor.

In some embodiments, the description text may include a content outline progressed according to a segment description corresponding to the target factor. The content outline may describe a story development order, a storyline, and the like. Taking a time factor as the target factor for example, the description text may be generated according to a time change, such as a time change of morning, noon, afternoon in a day, or a time change from a day to the third day, etc., to indicate a content outline that changes over time.

Therefore, based on a semantic understanding capability of the language model, any story line is supported by using natural language, and a more personalized automatic film formation effect can be provided.

Referring back to FIG. 2, further, the server device 120 selects (250), from the material set, a plurality of media content materials matching the description text. In some embodiments, when selecting the plurality of media content materials matching the description text from the material set, the server device 120 may select a plurality of media content materials from the material set based on the description information corresponding to each media content material in the material set matching the description text.

In such an embodiment, for description information corresponding to the media content material in the material set, the server device 120 may determine a plurality of material description information matching the description text, and select, from the material set, a plurality of media content materials respectively corresponding to the plurality of description information. The number of the plurality of media content materials may be predetermined.

In some embodiments, the plurality of media content materials are ordered based on the content outline in the media content. As an example, the server device 120 may order the plurality of media content materials according to the content outline after selecting the plurality of media content materials from the material set. As another example, when selecting the plurality of media content materials from the material set, the server device 120 may directly select the plurality of media content materials according to the content outline.

Therefore, based on the description text and the plurality of media content materials matching the description text, the generated media content can be more consistent with actual expression of the media content material and the request semantics of the user, which is beneficial to improving user experience.

Further, the server device 120 generates the media content 150 based on the plurality of media content materials. The media content may include, for example, a video. In some embodiments, upon generating the media content 150, the server device 120 may determine the media content template based on the description text and the plurality of media content materials. Then, the server device 120 may generate the media content 150 based on the plurality of media content materials and the media content template. For example, the media content 150 may be generated by populating the media content template with a plurality of media content materials. It should be understood that there may be other ways to generate the media content 150 based on the plurality of media content materials and the media content template.

In some embodiments, when determining the media content template based on the description text and the plurality of media content materials, the server device 120 may select, according to the number of the plurality of media content materials, at least one media content template having a corresponding number of material placement positions from a plurality of candidate media content templates. In such embodiments, each media content template has a respective number of material placement positions. As an example, each material placement position may be allowed to place one material. Further, the server device 120 may select (260) the media content template from the at least one media content template according to the description text.

In some embodiments, when selecting the media content template from the at least one media content template, the server device 120 may determine, with the language model, whether template description corresponding to the at least one media content template matches the description text, so as to select the media content template. The template description corresponding to the media content template matches the description text, and the template description may at least include a scene description.

As an example, a scene may have a plurality of categories, for example, a social scene, a travel scene, a festival scene, a pet scene, a delicious food scene, a sports scene, a reading scene, and the like, which is not limited herein. Each scene may have a corresponding scene description. In addition, a general scene description may be provided to adapt to a general scene. For example, the template description may further include a time description (for example, a description related to a season), a music description (for example, a description of different music styles such as soothing, cheering, rock rolling, etc.), or a description of other dimensions.

FIG. 7 illustrates a flowchart of a process 700 for selecting a media content template according to some embodiments of the present disclosure. The process 700 may be illustrated as a partial embodiment of the step of block 260 in FIG. 2. In the process 700, a plurality of matching labels may be extracted (710) from the description text with a language model, and then the server device 120 may perform template preliminary screening (720). During the template preliminary screening (720), the media content template with the number of slot positions (i.e., material placement positions) that is greater than the number of materials may be filtered out first, to avoid repeated playing of the media content material. Then, for the media content template with the same slot positions, a template with high label matching degree may be ranked higher. Then, the media content templates with high quality score may be ranked higher. In this way, a candidate template set including a plurality of media content templates may be preliminary selected. In addition, for the candidate template set, the recommendation result in a certain time period can be removed, so as to ensure that repeated media content templates are not used in a short time.

Further, the server device 120 may perform a template arrangement (730). Specifically, the most suitable media content template may be selected according to match between the description text and the template description with the language model. In addition, an ID (identification) of the media content template may also be output. Then, the template ID may be matched (740) to the plurality of media content materials. Next, the server device 120 may deliver the media content template and the plurality of media content materials to a film formation software development kit (SDK) of the terminal device 110. The SDK may be a set of related tools, documents, and example code for developing specific software applications, software frameworks, hardware platforms, operating systems, and the like. The SDK of the terminal device 110 may pull the media content template and the plurality of media content materials to perform real-time rendering of the media content 150.

In some embodiments, the server device 120 may generate, with another machine learning model, matching music text content based on the description text of the media content to be generated. Then, a matching melody is added to the music text content to generate target music. Further, the target music may be added to the media content. Therefore, media content with background music may be obtained.

In such embodiments, the another machine learning model may be constructed based on a language model. The machine learning model may be configured to generate lyrics (i.e., music text content) matching the description text based on input prompt words. The prompt word may be, for example, "You are a professional lyric writer, capable of generating some brief and light lyrics according to a provided topic, the topic is XXX". Then, after the lyrics are generated, a music tool or other machine learning model with music generation capability may be invoked to generate a matching melody based on the lyrics. By combining the melody with the lyrics, the target music may be generated. In this way, the target music may be matched with a picture of the media content. Richer media content conforming to the story context is thereby obtained. According to the embodiment of the present disclosure, the generated story media content conforms to the request semantics of the user and the actual presentation content of the media content material through matching of the input request semantics of the user and the plurality of factors, matching of the two and story description, and matching of the media content material and the story description, thus the information expressed by media content material is avoided from being lost. This enhances association between media content materials, and can obtain high-quality media content that meets user's requirements, which is beneficial to improving user experience.

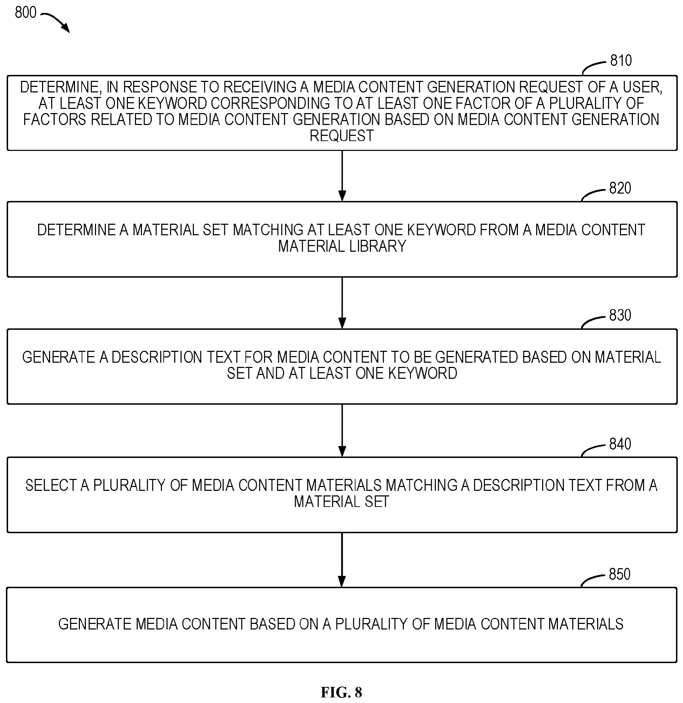

FIG. 8 illustrates a flowchart of a process 800 for media content generation according to some embodiments of the present disclosure. The process 800 may be implemented at terminal device 110 and/or server device 120. The following embodiments are implemented at the server device 120 as an example. The process 800 is described below with reference to FIG. 1.

As shown, at block 810, the server device 120 determines, in response to receiving a media content generation request of the user, at least one keyword corresponding to at least one factor of a plurality of factors related to the media content generation based on the media content generation request.

At block 820, the server device 120 determines a material set matching the at least one keyword from a media content material library.

At block 830, the server device 120 generates a description text for media content to be generated based on the material set and the at least one keyword.

At block 840, the server device 120 selects a plurality of media content materials matching the description text from the material set.

At block 850, the server device 120 generates media content based on the plurality of media content materials.

In some embodiments, determining the at least one keyword comprises: extracting at least one keyword corresponding to at least one factor of the plurality of factors from the media content generation request; and/or determining a keyword corresponding to at least one other factor of the plurality of factors based on a semantic analysis of the media content generation request.

In some embodiments, the plurality of factors include at least two of time factor, location factor, character factor, event factor.

In some embodiments, the media content material in the media content material library is marked with a label corresponding to at least some of the plurality of factors, and determining the material set comprises: extracting a marked label corresponding to the at least one factor of each visual material in the media content material library; and selecting the material set from the media content material library by matching a label corresponding to the at least one factor of each visual material with the at least one keyword.

In some embodiments, selecting the material set from the media content material library comprises: selecting a candidate material set with labels matching the at least one keyword from the media content material library; and filtering the candidate material set based at least on a predetermined material selection requirement to determine the material set.

In some embodiments, selecting the candidate material set with labels matching the at least one keyword from the media content material library comprises: selecting, according to each factor of the at least one factor, a predetermined number of media content materials with labels respectively matching keyword of each factor from the media content material library; and selecting the candidate material set related to the media content generation request from the predetermined number of media content materials.

In some embodiments, filtering the candidate material set comprises: filtering, with a machine learning model, the candidate material set based on a matching degree between the description information respectively corresponding to each media content material in the candidate material set and the material selection requirement.

In some embodiments, the process 800 further comprises marking the media content material in the media content material library with a label corresponding to at least some of the plurality of factors in the following manner: parsing the description information corresponding to the media content material in the media content material library to determine labels corresponding to at least some of the plurality of factors corresponding to the media content material; and constructing a knowledge graph corresponding to the media content material library, the knowledge graph indicating marked labels of the media content material library that corresponds to at least some of the factors.

In some embodiments, generating the description text comprises: generating, for a target factor in the at least one factor, a plurality of segment descriptions for media content to be generated based on the material set, the media content generation request, and a keyword corresponding to the target factor; and merging the plurality of segment descriptions into the description text, the description text comprising a plurality of segment descriptions arranged in sequence.

In some embodiments, the description text comprises a content outline progressed according to the segment description corresponding to the target factor, wherein the plurality of media content materials in the media content are ordered based on the content outline.

In some embodiments, selecting the plurality of media content materials matching the description text from the material set comprises: selecting the plurality of media content materials from the material set based on the match between the description information corresponding to each media content material in the material set an the description text.

In some embodiments, generating the media content comprises: determining a media content template based on the description text and the plurality of media content materials; and generating the media content based on the plurality of media content materials and the media content template.

In some embodiments, determining the media content template based on the description text and the plurality of media content materials comprises: selecting, according to the number of the plurality of media content materials, at least one media content template having a corresponding number of material placement positions from a plurality of candidate media content templates; and selecting the media content template from the at least one media content template according to the description text, wherein a template description corresponding to the media content template matches the description text, and the template description at least comprises a scene description.

In some embodiments, the process 800 further comprises: generating, with another machine learning model, matching music text content based on the description text of the media content to be generated; adding a matching melody to the music text content to generate the target music; and adding the target music to the media content.

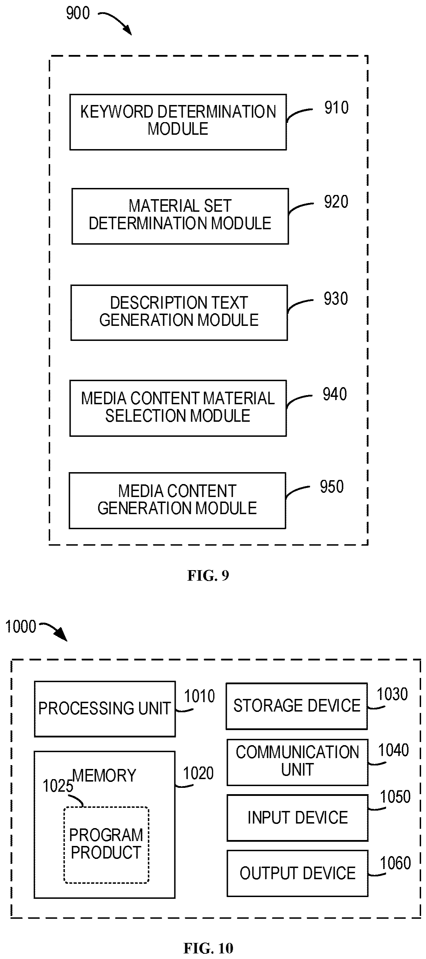

FIG. 9 is a schematic structural block diagram of an apparatus 900 for media content generation according to some embodiments of the present disclosure. The apparatus 900 may be implemented or included in the server device 120. Various modules/components in the apparatus 900 may be implemented by hardware, software, firmware, or any combination thereof.

As shown, the apparatus 900 comprises a keyword determination module 910 configured to determine, in response to receiving a video media content generation query request of a user, at least one keyword corresponding to at least one factor of a plurality of factors related to the media content generation story based on the video media content generation query request; a material set determination module 920 configured to determine a material set matching the at least one keyword from the media content material library; a description text generation module 930 configured to generate a description text for the media content to be generated based on the material set and the at least one keyword; a media content material selection module 940 configured to select a plurality of media content materials matching the description text from the material set; and a media content generation module 950 configured to generate the media content based on the plurality of media content materials.

In some embodiments, the keyword determination module 910 is further configured to extract at least one keyword corresponding to at least one factor of the plurality of factors from the media content generation request; and/or determine a keyword corresponding to at least one other factor of the plurality of factors based on the semantic analysis of the media content generation request.

In some embodiments, the plurality of factors include at least two of: time factor, location factor, character factor, event factor.

In some embodiments, the media content material in the media content material library is marked with a label corresponding to at least some of the plurality of factors, and the material set determining module 920 is further configured to extract a marked label corresponding to the at least one factor of each visual material in the media content material library; and select the material set from the media content material library by matching the label corresponding to the at least one factor of each visual material with the at least one keyword.

In some embodiments, the apparatus 900 is further configured to select a candidate material set with labels matching the at least one keyword from the media content material library; and filter the candidate material set based at least on a predetermined material selection requirement to determine the material set.

In some embodiments, the apparatus 900 is further configured to select, according to each factor of the at least one factor, a predetermined number of media content materials with labels respectively matching keyword of the factor from the media content material library; and select the candidate material set related to the media content generation request from the predetermined number of media content materials.

In some embodiments, the apparatus 900 is further configured to filter, with a machine learning model, the candidate material set based on a matching degree between description information respectively corresponding to each media content material in the candidate material set and the material selection requirement.

In some embodiments, the apparatus 900 further comprises a label marking module configured to parse the description information corresponding to the media content material in the media content material library, to determine labels corresponding to at least some of the plurality of factors corresponding to the media content material; and construct a knowledge graph corresponding to the media content material library, the knowledge graph indicating marked labels corresponding to at least some of the factors of each media content material in the media content material library.

In some embodiments, the description text generation module 930 is further configured to generate, for a target factor of the at least one factor, a plurality of segment descriptions for media content to be generated based on the material set, the media content generation request, and a keyword corresponding to the target factor; and merge the plurality of segment descriptions into the description text, the description text comprising a plurality of segment descriptions arranged in sequence.

In some embodiments, the description text comprises a content outline progressed according to the segment description corresponding to the target factor, wherein the plurality of media content materials in the media content are ordered based on the content outline.

In some embodiments, the media content material selection module 940 is further configured to select the plurality of media content materials matching the description text comprises: selecting the plurality of media content materials from the material set based on the match between the description information corresponding to each media content material in the material set an the description text.

In some embodiments, the media content generation module 950 is further configured to determine a media content template based on the description text and the plurality of media content materials; and generate the media content based on the plurality of media content materials and the media content template.

In some embodiments, the apparatus 900 is further configured to select, according to the number of the plurality of media content materials, at least one media content template having a corresponding number of material placement positions from a plurality of candidate media content templates; and select the media content template from the at least one media content template according to the description text, wherein the template description corresponding to the media content template matches the description text, and the template description at least comprises a scene description.

In some embodiments, the apparatus 900 further comprises a music adding module configured to generate, with another machine learning model, matching music text content based on the description text of the media content to be generated; add a matching melody to the music text content to generate the target music; and add the target music to the media content.

Units and/or modules included in the apparatus 900 may be implemented in various manners, including software, hardware, firmware, or any combination thereof. In some embodiments, one or more units and/or modules may be implemented using software and/or firmware, such as machine-executable instructions stored on a storage medium. In addition to or as an alternative to machine-executable instructions, some or all of the units and/or modules in the apparatus 900 may be implemented, at least in part, by one or more hardware logic components. By way of example and not limitation, illustrative types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

FIG. 10 illustrates a block diagram of an electronic device 1000 in which one or more embodiments of the present disclosure may be implemented. It should be understood that the electronic device 1000 illustrated in FIG. 10 is merely illustrative and should not constitute any limitation on functionality and scope of the embodiments described herein. The electronic device 1000 shown in FIG. 10 may be configured to implement the extended reality device 120 in FIG. 1.

As shown in FIG. 10, the electronic device 1000 is in a form of a general-purpose computing device. Components of the electronic device 1000 may include, but are not limited to, one or more processors or processing units 1010, a memory 1020, a storage device 1030, one or more communication units 1040, one or more input devices 1050, and one or more output devices 1060. The processing unit 1010 may be an actual or virtual processor and capable of performing various processes according to programs stored in the memory 1020. In multiprocessor systems, a plurality of processing units execute computer-executable instructions in parallel to improve parallel processing capabilities of the electronic device 1000.

The electronic device 1000 typically includes a plurality of computer storage media. Such media may be any available media accessible to the electronic device 1000, including, but not limited to, volatile and non-volatile media, removable and non-removable media. The memory 1020 may be volatile memory (e.g., registers, caches, random access memory (RAM)), non-volatile memory (e.g., read-only memory (ROM), electrically erasable programmable read-only memory (EEPROM), flash memory), or some combination thereof. The storage device 1030 may be a removable or non-removable medium and may include a machine-readable medium, such as a flash drive, magnetic disk, or any other medium, which may be capable of storing information and/or data and may be accessed within the electronic device 1000.

The electronic device 1000 may further include additional removable/non-removable, volatile/non-volatile storage media. Although not shown in FIG. 10, a disk drive for reading from or writing into a removable, nonvolatile magnetic disk (e.g., a "floppy disk") and an optical disk drive for reading from or writing into a removable, nonvolatile optical disk may be provided. In these cases, each drive may be connected to a bus (not shown) by one or more data media interfaces. The memory 1020 may include a computer program product 1025 having one or more program modules configured to perform various methods or actions of various embodiments of the present disclosure.

The communications unit 1040 implements communications with other computing devices over a communications medium. Additionally, the functionality of components of the electronic device 1000 may be implemented in a single computing cluster or a plurality of computing machines capable of communicating over a communication connection. Thus, the electronic device 1000 may operate in a networked environment using logical connections with one or more other servers, network personal computers (PCs), or another network node.

The input device 1050 may be one or more input devices, such as a mouse, a keyboard, a trackball, or the like. The output device 1060 may be one or more output devices, such as a display, a speaker, a printer, or the like. The electronic device 1000 may also communicate with one or more external devices (not shown) through the communication unit 1040 as needed, the external devices are such as storage devices, display devices, etc., communicate with one or more devices that enable a user to interact with the electronic device 1000, or communicate with any device (e.g., network card, modem, etc.) that enables the electronic device 1000 to communicate with one or more other computing devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of flowcharts and/or block diagrams, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that instructions, when executed by a processing unit of a computer or other programmable data processing apparatus, produce means to implement functions/acts specified in the flowcharts and/or block diagrams. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram(s).

The computer-readable program instructions may be loaded onto a computer, other programmable data processing apparatus, or other device, such that a series of operational steps are performed on a computer, other programmable data processing apparatus, or other device to produce a computer-implemented process such that the instructions executed on a computer, other programmable data processing apparatus, or other device implement the functions/acts specified in one or more blocks in the flowcharts and/or block diagram.

The flowcharts and block diagrams in the drawings show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the drawings. For example, two consecutive blocks may actually be performed substantially in parallel, which may sometimes be performed in the reverse order, depending on involved functionality. It is also noted that each block in the block diagrams and/or flowchart, as well as combinations of blocks in the block diagrams and/or flowchart, may be implemented with a dedicated hardware-based system that performs specified functions or actions, or may be implemented in a combination of dedicated hardware and computer instructions.

Various implementations of the present disclosure have been described above, which are illustrative, not exhaustive, and are not limited to the implementations disclosed. Many modifications and alterations will be apparent to those of ordinary skill in the art without departing from the scope of the illustrated implementations. The selection of the terms used herein is intended to best explain the principles of the implementations, practical applications, or improvements to techniques in the marketplace, or to enable others of ordinary skill in the art to understand the various implementations disclosed herein.

## Claims

1. A method (800) for media content generation, comprising:
determining (810), in response to receiving a media content generation request of a user, at least one keyword corresponding to at least one factor of a plurality of factors related to media content generation based on the media content generation request;
determining (820) a material set matching the at least one keyword from a media content material library;
generating (830) a description text for media content to be generated based on the material set and the at least one keyword;
selecting (840) a plurality of media content materials matching the description text from the material set; and
generating (850) media content based on the plurality of media content materials.

2. The method (800) of claim 1, wherein determining (810) the at least one keyword comprises:
extracting at least one keyword corresponding to at least one factor of the plurality of factors from the media content generation request; and/or
determining a keyword corresponding to at least one other factor of the plurality of factors based on a semantic analysis of the media content generation request.

3. The method (800) of claim 1 or 2, wherein the media content material in the media content material library is marked with a label corresponding to at least some of the plurality of factors, and determining (820) the material set comprises:
extracting a marked label corresponding to the at least one factor of each visual material in the media content material library; and
selecting the material set from the media content material library by matching a label corresponding to the at least one factor of each visual material with the at least one keyword.

4. The method (800) of claim 3, wherein selecting the material set from the media content material library comprises:
selecting a candidate material set with labels matching the at least one keyword from the media content material library; and
filtering the candidate material set based at least on a predetermined material selection requirement to determine the material set.

5. The method (800) of claim 4, wherein selecting the candidate material set with labels matching the at least one keyword from the media content material library comprises:
selecting, according to each factor of the at least one factor, a predetermined number of media content materials with labels respectively matching keyword of each factor from the media content material library; and
selecting the candidate material set related to the media content generation request from the predetermined number of media content materials.

6. The method (800) of claim 4, wherein filtering the candidate material set comprises:
filtering , with a machine learning model, the candidate material set based on a matching degree between description information respectively corresponding to each media content material in the candidate material set and the material selection requirement.

7. The method (800) of claim 3, further comprising marking the media content material in the media content material library with labels corresponding to at least some of the plurality of factors by:
parsing the description information corresponding to the media content material in the media content material library, to determine labels corresponding to at least some of the plurality of factors corresponding to the media content material; and
constructing a knowledge graph corresponding to the media content material library, the knowledge graph indicating marked labels corresponding to at least some of factors of each media content material in the media content material library.

8. The method (800) of any of claims 1 to 7, wherein generating (830) the description text comprises:
generating, for a target factor of the at least one factor, a plurality of segment descriptions for media content to be generated based on the material set, the media content generation request, and a keyword corresponding to the target factor; and
merging the plurality of segment descriptions into the description text, the description text comprising the plurality of segment descriptions arranged in sequence.

9. The method (800) of any of claims 1 to 8, wherein selecting (840) the plurality of media content materials matching the description text from the material set comprises:
selecting the plurality of media content materials from the material set based on the match between the description information corresponding to each media content material in the material set an the description text.

10. The method of any of claims 1 to 9, wherein generating (850) the media content comprises:
determining a media content template based on the description text and the plurality of media content materials; and
generating the media content based on the plurality of media content materials and the media content template.

11. The method (800) of claim 10, wherein determining the media content template based on the description text and the plurality of media content materials comprises:
selecting, according to the number of the plurality of media content materials, at least one media content template having a corresponding number of material placement positions from a plurality of candidate media content templates; and
selecting the media content template from the at least one media content template according to the description text, wherein a template description corresponding to the media content template matches the description text, and the template description at least comprises a scene description.

12. An apparatus (900) for media content generation, comprising:
a keyword determination module (910) configured to determine, in response to receiving a media content generation request of a user, at least one keyword corresponding to at least one factor of a plurality of factors related to media content generation based on the media content generation request;
a material set determination module (920) configured to determine a material set matching the at least one keyword from a media content material library;
a description text generation module (930) configured to generate a description text for media content to be generated based on the material set and the at least one keyword;
a media content material selection module (940) configured to select a plurality of media content materials matching the description text from the material set; and
a media content generation module (950) configured to generate media content based on the plurality of media content materials.

13. An electronic device (1000), comprising:
at least one processor (1010); and
at least one memory (1020) coupled to the at least one processor (1010) and storing instructions for execution by the at least one processor (1010), the instructions, when executed by the at least one processor (1010), causing the electronic device (1000) to perform the method of any of claims 1 to 11.

14. A computer-readable storage medium having stored thereon a computer program executable by a processor to implement the method of any of claims 1 to 11.

15. A computer program product (1025) tangibly stored in a computer storage medium and comprising computer-executable instructions that, when executed by a device, cause the device to perform the method of any of claims 1 to 11.
